(19) Europäisches Patentamt / European Patent Office / Office européen des brevets

(11) **EP 2 729 303 B1**

(12) **FASCICULE DE BREVET EUROPEEN**

(45) Date de publication et mention
de la délivrance du brevet:
**08.08.2018   Bulletin 2018/32**

(21) Numéro de dépôt: **12729524.4**

(22) Date de dépôt: **18.06.2012**

(51) Int Cl.:
***B32B 17/10*** *(2006.01)*

(86) Numéro de dépôt international:
**PCT/EP2012/061557**

(87) Numéro de publication internationale:
**WO 2013/004473 (10.01.2013 Gazette 2013/02)**

(54) **VITRAGE AUTOMOBILE**

GLASSCHEIBE FÜR EIN KRAFTFAHRZEUG

GLASS PANEL FOR AN AUTOMOBILE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **04.07.2011   BE 201100415**

(43) Date de publication de la demande:
**14.05.2014   Bulletin 2014/20**

(73) Titulaire: **AGC Glass Europe
1348 Louvain-la-Neuve (BE)**

(72) Inventeurs:
• **GILLARD, Quentin
  B-6040 Jumet (BE)**
• **HUBERT, Renaud
  B-6040 Jumet (BE)**
• **LECOMTE, Benoit
  B-6040 Jumet (BE)**
• **LOSOT, Rostislav
  B-6040 Jumet (BE)**
• **LUCCA, Nerio
  B-6040 Jumet (BE)**

(74) Mandataire: **Le Vaguerèse, Sylvain Jacques
AGC Glass Europe
Technovation Centre
IP Department
Rue Louis Blériot, 12
6041 Gosselies (BE)**

(56) Documents cités:
**EP-A2- 0 895 853          WO-A1-00/73062
DE-A1-102009 017 805    GB-A- 2 011 316
GB-A- 2 078 169**

**Description**

L'invention est relative à un vitrage feuilleté bombé pour automobile.

La demande des constructeurs automobile se porte de plus en plus fréquemment vers des vitrages allégés. La réduction du poids des vitrages se traduit par des diminutions d'épaisseur des feuilles de verre qui les composent. Le choix des vitrages allégés ne modifie pas les exigences pour ce qui concerne les qualités de ces vitrages, qu'il s'agisse de résistance mécanique ou de qualités optiques.

Simultanément les constructeurs proposent des modèles dont les vitrages offrent de nouvelles propriétés, ou dont les surfaces vitrées s'accroissent. La présence de toits vitrés constitue un exemple de ces tendances. Les feuilletés sont aussi proposés pour tous les vitrages pour des raisons de confort acoustique ou de protection anti effraction notamment.

La substitution de vitrages feuilletés à des vitrages monolithiques, comme ceux traditionnellement utilisés pour les vitrages latéraux ou les lunettes arrière, conduit à rechercher des assemblages de feuilles de verre de relativement faibles épaisseurs. Ces vitrages le plus usuellement sont constitués de feuilles de verre trempé de l'ordre de 4mm d'épaisseur. Le remplacement de ces feuilles monolithiques par des ensembles feuilletés, conduit à utiliser des feuilles de verre dont les épaisseurs sont le plus souvent de moins de 3mm. Cette réduction est d'autant plus nécessaire que les assemblages feuilletés comportent une feuille intercalaire thermoplastique qui ajoute à l'épaisseur de l'ensemble et qu'une des questions posées dans l'idée de ces substitutions, est aussi sur un même modèle d'offrir l'option feuilletée parallèlement à celle du vitrage monolithique, sans modifier les éléments dans lesquels ces vitrages sont intégrés, notamment les glissières des latéraux mobiles.

La constitution des vitrages feuilletés de faible épaisseur soulève un certain nombre de questions en particulier lorsque les vitrages doivent être bombés.

Les techniques qui impliquent un traitement thermique, qu'il s'agisse de bombage ou de trempe pour les feuilles de verre de faible épaisseur, sont susceptibles d'imposer des mesures particulières pour garantir le maintien de propriétés satisfaisantes, notamment de propriétés optiques mais aussi mécaniques. Par exemple la trempe thermique des feuilles est d'autant plus délicate que la feuille de verre est plus mince. Le bombage des feuilles, notamment le bombage simultané de deux feuilles, particulièrement lorsque les deux feuilles sont d'épaisseurs différentes, soulève aussi des problèmes spécifiques.

Le but de l'invention est de conduire à l'obtention de vitrages feuilletés et bombés de faible épaisseur, et présentant toutes les qualités mécaniques ou optiques requises par les constructeurs automobile, notamment pour satisfaire aux normes dans ce domaine. Le but poursuivi doit être atteint sans pour autant imposer des traitements coûteux où dont les rendements seraient insuffisants.

L'art antérieur connait un grand nombre de techniques dédiées à la production de vitrages feuilletés bombés. Les techniques les plus répandues, partant des feuilles planes superposées, procèdent au bombage des deux feuilles simultanément. Dans ces techniques les moyens traditionnels utilisés s'efforcent autant que possible de faire en sorte qu'au cours de l'opération de bombage les deux feuilles superposées se trouvent dans des conditions aussi voisines que possible. Ceci passe en particulier par une maîtrise de la température de ces feuilles lorsqu'elles se déforment, que ce soit par gravité ou par pressage, ou encore en combinant ces deux modes.

Les techniques antérieures, concernant le bombage simultané des deux feuilles, ont montré que la complexité s'accroissait lorsque les feuilles appariées étaient différentes l'une de l'autre, que ce soit par l'épaisseur, la composition du verre, la présence éventuelle d'éléments associés comme des parties émaillées ou encore la présence de couches fonctionnelles.

Le brevet EP 1 200 255 fait état de ce type de difficulté, en particulier pour des ensembles comportant la présence de couches qui modifient le comportement des feuilles dans un traitement thermique. Cette publication vise des feuilles de verre relativement épaisses, et l'essentiel de son enseignement concerne la maîtrise de la température de chaque feuille au cours du bombage.

Pour tenir compte des difficultés rencontrées dans ces techniques comportant le bombage simultané des deux feuilles, ou encore pour minimiser les coûts de production, d'autres techniques sont aussi connues de l'art antérieur, en particulier celles dans lesquelles les deux feuilles sont bombées séparément. Ce type de mise en oeuvre n'est pas exempt de difficultés. L'appariement des feuilles révèle souvent que les formes obtenues ne sont pas rigoureusement les mêmes, ce qui pose des problèmes lors de l'assemblage et ultérieurement pour les propriétés optiques de ces vitrages.

L'invention propose des modalités de production de vitrages feuilletés bombés tels que faisant l'objet de la revendication 1 à savoir un vitrage automobile feuilleté de forme incurvée résultant de l'assemblage d'une première feuille de verre incurvée préalablement à cet assemblage, d'une feuille intercalaire thermoplastique et d'une deuxième feuille de verre d'épaisseur qui n'est pas supérieure au tiers de celle de la première feuille, la deuxième feuille de verre ne présentant pas de courbure, ou une courbure sensiblement moindre que celle de la première feuille avant son assemblage avec cette dernière et la feuille intercalaire thermoplastique.

Selon l'invention, le vitrage automobile feuilleté a un rapport des épaisseurs qui est d'au moins 3/1 et dans lequel dans l'assemblage effectué la deuxième feuille de verre présente une contrainte de surface qui n'est pas supérieure à 50MPa, et de préférence pas supérieure à 30MPa.

Dans son principe l'invention propose pour la constitution de ces vitrages feuilletés peu épais, d'assembler deux feuilles de verre d'épaisseur différentes qui présentent, avant assemblage, des formes également différentes, la feuille la plus épaisse préalablement bombée, déterminant de façon dominante la forme finale de l'ensemble. Autrement dit dans l'opération d'assemblage des deux feuilles aboutissant au vitrage feuilleté final, la feuille la plus mince subit une déformation qui lui fait épouser sensiblement la forme de la feuille la plus épaisse. Dans cette opération la feuille épaisse peut aussi subir une modification de sa forme mais celle-ci est très limitée et suffisamment réduite pour que la forme du vitrage feuilleté final puisse être assimilée à celle de la feuille épaisse avant son assemblage.

Pour atteindre ce résultat il est nécessaire que les caractéristiques mécaniques de résistance à la flexion des deux feuilles soient suffisamment différentes. L'épaisseur des feuilles détermine de manière prépondérante le comportement à la flexion. Pour que la feuille la plus épaisse soit capable d'imposer sa forme, son épaisseur est plusieurs fois celle de la feuille la plus mince. Selon l'invention le rapport des épaisseurs est d'au moins 3/1 et de préférence d'au moins 4/1. Plus ce rapport est élevé plus le bombage du vitrage feuilleté est conforme à celui de la feuille la plus épaisse.

Le choix de la technique visant notamment la production de vitrages dont les épaisseurs ne sont pas supérieures à celles des vitrages monolithiques antérieurs, l'épaisseur des vitrages feuilletés selon l'invention est pour l'essentiel au plus de l'ordre de 4mm, ceci comprenant l'épaisseur de la feuille intercalaire thermoplastique.

Les feuilles thermoplastiques utilisées sont les feuilles traditionnelles. Le plus usuellement il s'agit donc de feuille de polyvinyl-butyral (PVB) dont les épaisseurs commercialisées sont de 0,38 ou 0,76mm. La constitution des vitrages selon l'invention ne nécessite pas d'épaisseurs spécifiques. Des combinaisons de plusieurs feuilles sont également possibles. Mais dans la pratique le choix le plus fréquent sera d'utiliser les feuilles disponibles le cas échéant après que celles-ci aient subi un étirage selon les pratiques connues dans ce domaine. Dans la pratique on préfère utiliser une feuille intercalaire dont l'épaisseur n'est pas supérieure à 0,8mm, quelle que soit la nature de cette feuille.

En conséquence de ce qui précède dans les vitrages selon l'invention les épaisseurs cumulées des deux feuilles de verre ne dépassent pas de avantageusement 3,7mm. Cette épaisseur cumulée est le plus souvent inférieure à 3,2mm et de préférence inférieure à 2,8mm.

Comme il résulte des conditions indiquées précédemment, la deuxième feuille de verre, qui doit subir une déformation significative lors de l'assemblage, est nécessairement relativement mince. Plus elle est mince plus facile est la mise en forme.

Pour bénéficier des avantages liés à la réduction d'épaisseur il est préférable de choisir la deuxième feuille d'épaisseur au plus égale à 0,8mm et de préférence au plus égale à 0,6mm. Des feuilles aussi minces que 0,4 sont aussi bien adaptées aux produits selon l'invention.

Les conditions de production et de mise en oeuvre ultérieure des feuilles très minces constituent une limite à la diminution de l'épaisseur. Les feuilles minces des vitrages feuilletés selon l'invention ont une épaisseur qui avantageusement n'est pas inférieure à 0,1mm et de préférence pas inférieure à 0,2mm.

Pour la feuille la plus épaisse du feuilleté, son épaisseur reste cependant limitée pour ne pas compromettre le bénéfice de l'allégement de l'ensemble. De préférence cette feuille n'est pas d'épaisseur supérieure à 3,2mm, et de manière particulièrement préférée pas supérieure à 2,1mm. Pour les vitrages feuilletés les moins épais, la feuille "épaisse" peut être aussi mince que 1,6mm ou même moins, notamment 1,2mm.

En dehors de l'épaisseur des feuilles la différence de leurs formes avant assemblage est aussi déterminante pour conduire à un vitrage de qualité stable dans le temps. Les contraintes introduites dans les feuilles doivent en effet rester dans les limites que le vitrage feuilleté peut supporter sans risque de modifications ultérieures, ou sans altérer les propriétés des vitrages, notamment les propriétés mécaniques.

Les contraintes imposées concernent d'abord la deuxième feuille qui subit la déformation la plus forte. Les contraintes supportables sans risque de défaut dans l'ensemble feuilleté sont fonction aussi de l'épaisseur des feuilles. Moins épaisse est la deuxième feuille plus les feuilles étant flexibles, plus la déformation imposée et donc les contraintes de surface développées peuvent être importantes.

Les contraintes maximales qui peuvent être imposées à une feuille de verre en fonction de la flexion uniforme subie répondent à l'expression :

$$\sigma = E.h/2.R(1-n^2)$$

dans laquelle $h$ est l'épaisseur de la feuille, $R$ le rayon de courbure, $E$ est le module de Young (pour le verre pratiquement 72GPa), et $n$ le coefficient de Poisson (en pratique 0,22).

Partant de cette expression, pour chaque épaisseur et pour une contrainte que l'on s'impose de ne pas dépasser, on déduit le rayon de courbure qui peut être appliqué à la feuille. Le choix des contraintes de surface qui doivent être respectées sont fonction des modes d'utilisation. Il faut en particulier distinguer les contraintes permanentes, celle qui, comme l'indique leur nom, sont présentes dans la feuille à tout moment, et les contraintes instantanées. Ces dernières sont celles qui résultent de déformations additionnelles. Pour les véhicules elles sont la conséquence de la déformabilité limitée de l'habitacle en fonction de la situation du véhicule. Les contraintes permanentes sont celles qui imposent les limites dans le cas présent. Elles sont nécessairement inférieures aux contraintes instantanées supportables par la feuille.

Dans la pratique les contraintes de surface que l'on s'efforce de ne pas dépasser pour la deuxième feuille sont avantageusement de 50MPa, de préférence de 30MPa.

Les exemples donnés dans la suite montrent quelles courbures en fonction des épaisseurs des feuilles correspondent à ces choix

Les limites dans les conditions d'assemblage peuvent aussi être exprimées par rapport aux courbures imposées aux vitrages. L'importance des courbures imposées en tenant compte des épaisseurs des feuilles, constitue une autre approche des conditions qu'il est préférable de respecter dans la production des vitrages selon l'invention.

De manière avantageuse les courbures de la première feuille ne doivent pas avoir un rayon inférieur à 1m, et de façon préférée pas inférieur à 1,5m.

Par ailleurs les courbures possibles rendent compte de la déformation qui peut être supportée par la deuxième feuille. Si cette deuxième feuille n'est pas plane mais elle-même préalablement incurvée, la courbure finale peut être plus accentuée, la déformation résultante restant limitée. Pour les vitrages selon l'invention le rapport des rayons de courbure les plus petits, de la deuxième feuille, $R_2$ à la ceux de la première feuille $R_1$ est avantageusement tel que $R_2/R_1>2$ et de préférence $R_2/R_1>10$. Lorsque dans le cas préféré la deuxième feuille est plane le rapport est infini.

A propos de résistance mécanique des feuilles il faut aussi prendre en considération la fragilité qui peut provenir des bords des feuilles. La présence de microfissures sur les bords des feuilles de verre est connue pour générer des casses si aucune mesure n'est prise pour les stabiliser. Pour réduire ou éliminer ces fissures dans les feuilles monolithiques de l'art antérieur, le plus usuels est de procéder à un "rodage" soigneux des bords. Le rodage des bords des feuilles les plus minces est une opération délicate en raison de leur fragilité. Si le rodage ne peut être entrepris, ou ne peut suffire à protéger les feuilles, notamment les feuilles minces, la prévention d'amorce de rupture est avantageusement obtenue ou complétée par l'introduction de contraintes en compression dans les bords des feuilles.

Pour les vitrages de l'art antérieur monolithiques, et donc relativement épais, la prévention des ruptures à partir des bords est obtenue le plus souvent par une trempe thermique.

La trempe thermique des feuilles minces est une opération difficile. L'inertie thermique est réduite, de sorte qu'il est difficile de maintenir un gradient de température suffisant dans l'épaisseur de la feuille. Lorsque cette trempe thermique pour les feuilles minces est trop délicate, la trempe particulièrement pour la deuxième feuille, est avantageusement conduite de façon chimique selon les techniques traditionnelles. Dans ces techniques le but est de substituer aux constituants tels que le sodium des éléments plus volumineux comme le potassium.

Les techniques d'assemblage des feuilles doivent combiner une pression exercée sur les feuilles superposées entre lesquelles à été placée la feuille intercalaire thermoplastique, et une élévation de température conduisant au collage de la feuille thermoplastique aux deux feuilles de verre. Pour assurer un contact entre les trois éléments superposés, il est avantageux de faire le vide entre les deux feuilles de verre de manière que la pression externe s'exerce de manière uniforme sur la surface entière de ces deux feuilles.

Suivant des techniques traditionnelles de mise en oeuvre, le vide peut être obtenu dans une enveloppe en matériau souple étanche à l'air dans laquelle l'ensemble des éléments du vitrage est placé. Dans ce cas la pression s'exerce par l'intermédiaire de l'enveloppe en question. Il est aussi possible de disposer, également de façon connue, un anneau couvrant seulement la périphérie du vitrage.

Quelque soit le mode permettant d'assurer la pression sur l'ensemble à feuilleter, cette pression doit être suffisante pour appliquer fortement les deux feuilles de verre l'une sur l'autre avec entre les deux la feuille thermoplastique.

Lorsque les feuilles sont ainsi pressées l'une sur l'autre la température est portée à un niveau qui rend le matériau thermoplastique adhérent par contact avec le verre. La température reste limitée pour ne pas conduire à un ramollissement excessif du matériau thermoplastique. Pour le polyvinyl-butyral, qui constitue le matériau thermoplastique le plus usuel, la température est de l'ordre de 100 à 120°C.

Postérieurement à l'étape conduisant au collage des feuilles de verre par l'intermédiaire de la feuille thermoplastique, le vitrage feuilleté est habituellement insuffisamment transparent. Le traitement ultérieur consiste en un passage en étuve et sous pression à une température supérieure à celle précédemment mise en oeuvre pour le collage. Dans le cas d'un intercalaire en polyvinyl-butyral la température atteinte s'élève par exemple à environ 140°C.

Les modalités de production des vitrages feuilletés selon l'invention peuvent s'appliquer à tous les verres usuellement utilisés pour constituer des vitrages automobile. Il s'agit de verre clairs mais aussi de verres colorés voire de verres à très faible transmission lumineuse comme les verres dit "privacy".

Les verres utilisés dans le feuilleté sont soit identiques soit différents. Comme indiqué en préambule, un avantage de la technique considérée est d'ouvrir les possibilités d'apparier des feuilles qui dans des techniques traditionnelles de bombage simultané conduiraient difficilement à des formes parfaitement superposables.

Il est aussi possible selon l'invention de revêtir l'une ou l'autre des deux feuilles, ou les deux feuilles, de couches fonctionnelles. Il s'agit de façon habituelle par exemple de couches d'émail pour le masquage des éléments inesthétiques, tels que les cordons de colle de fixation de ces vitrages. Il s'agit surtout des couches fonctionnelles procurant au vitrage des propriétés de réflexion des infrarouges pour garantir le confort thermique à l'intérieur du véhicule.

Les systèmes de couches réfléchissant sélectivement les infrarouges sont connus pour être relativement fragiles aux températures nécessaires pour le bombage qui se situent à environ 650-700°C. Un avantage potentiel des vitrages selon l'invention est de permettre d'obtenir des vitrages bombés sans que la feuille sur laquelle le système de couche est appliqué soit soumise à ces températures élevées. Pour cela on choisit d'appliquer le système de couches sur la feuille mince qui n'est bombée de préférence que par la déformation opérée au cours de l'assemblage.

Les vitrages selon l'invention peuvent encore inclure des intercalaires composés, comportant des éléments fonctionnels connus par ailleurs. Il s'agit par exemple d'intercalaires comportant des cellules photovoltaïques, ou des éléments électriquement commandés pour modifier les caractéristiques de la transmission lumineuse : électro-chromes, particules suspendues ...

D'autres fonctions sont aussi liées à la nature de l'intercalaire. En particulier les vitrages peuvent être réalisés en intégrant un intercalaire présentant de propriétés d'amortissement acoustique. Ces intercalaires peuvent notamment compenser au moins en partie la réduction d'épaisseur des feuilles de verre dans leur contribution à cet amortissement acoustique.

L'invention est décrite de manière détaillée dans la suite en faisant référence aux planches de figures dans lesquelles :

- la figure 1 est un schéma exposant le principe de la mise en oeuvre de l'invention ;

- la figure 2 est un schéma sur lequel les éléments dimensionnels des vitrages selon l'invention sont illustrés ;

- la figure 3 est un diagramme de la première étape d'un cycle d'assemblage des vitrages selon l'invention ;

- la figure 4 est un diagramme d'une seconde étape d'un cycle d'assemblage des vitrages selon l'invention ;

- la figure 5 donne l'exemple du rapport rayon de courbure et épaisseur pour trois niveaux de contraintes correspondantes.

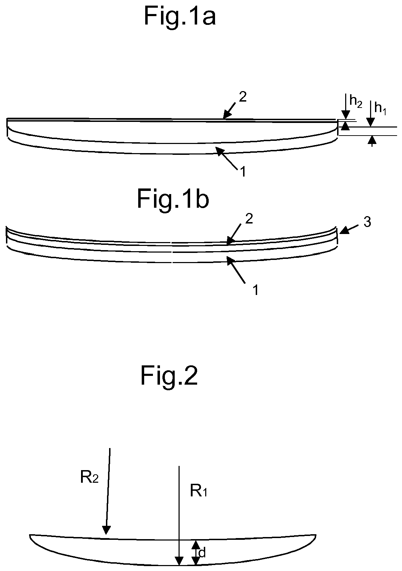

La figure 1a présente le principe de l'association de deux feuilles de verre selon l'invention. Une feuille de verre 1 est préalablement bombée dans une technique usuelle pour le bombage de feuille unique. Ce bombage peut être obtenu par pressage, par gravité ou une combinaison de pressage et gravité.

Une feuille de verre 2 présente une courbure sensiblement moindre, ou mieux est plane.

Les deux feuilles sont de dimensions sensiblement identiques pour qu'une fois assemblées, leurs bords soient contigus. Cette disposition qui n'est pas exactement représentée fait que dans la superposition des feuilles la feuille plane 2, ou presque plane, déborde très légèrement par rapport à la feuille 1 préalablement bombée. Le schéma exagère les différences de formes pour la compréhension. Dans la pratique les courbures étant relativement faibles, le débord initial reste très faible ce qui permet un assemblage final bord à bord adéquat.

Comme indiqué pour permettre de conformer la feuille 2 à la feuille 1, leurs épaisseurs respectives sont très différentes, la feuille 2 devant subir une déformation mécanique en jouant de sa flexibilité, est de faible épaisseur comparée à celle de la feuille 1 qui est nécessairement plus rigide. La déformation de la feuille 2 est obtenue lors de l'assemblage par pression exercée sur les faces externes des deux feuilles.

A la figure 1b l'assemblage final comprend en plus des deux feuilles de verre une feuille intercalaire thermoplastique 3 du type traditionnellement utilisée dans les vitrages feuilletés.

Le mode de composition des vitrages selon l'invention qui joue des différence de rigidité des feuilles conduit nécessairement à un bombage qui se développe de manière essentiellement "cylindrique", donc selon une seule direction, par opposition au bombage "sphérique" qui se développe selon deux directions. Tout bombage sphérique implique une "extension" dans le plan de la feuille de verre, extension qui n'est possible que lors du ramollissement à température élevée. Les feuilles de verre ne connaissent pas à froid une élasticité qui permettrait un bombage sphérique significatif. Pour cette raison les figures montrent les feuilles de verres incurvées dans une seule direction.

Les feuilles assemblées ont des épaisseurs très différentes. Des assemblages répondant de façon satisfaisante en termes de qualité optique sont obtenus par exemple par assemblage de verre de 0,9mm et de 3,8mm, mais l'intérêt de ce type d'assemblage est surtout de former des feuilletés très peu épais. A titre d'exemple des vitrages réalisés avec une feuille de 0,4mm et une feuille de 1,6mm sont particulièrement intéressants. Associés à une feuille intercalaire de 0,76mm ils présentent une épaisseur totale de 2,76mm, et sont plus légers que les vitrages monolithiques traditionnels, d'épaisseur supérieure.

Vis-à-vis de ces vitrages monolithiques les vitrages selon l'invention offrent en plus des caractéristiques mécaniques avantageuses. Dans ce type d'assemblage les caractéristiques anti-intrusion sont ajoutées par la présence de la feuille thermoplastique. Par ailleurs les essais d'impact désignés "gravel test" montrent, comme il est connu, une meilleure résistance du fait de l'assemblage de deux feuilles d'épaisseurs différentes.

La figure 2 présente de manière schématique les paramètres de structure associés aux vitrages feuilletés selon l'invention en dehors de ceux concernant les épaisseurs $h_1$ et $h_2$ présentées à la figure 1a. Les rayons de courbure $R_1$ et $R_2$ sont présentés avec la distance la plus grande $\underline{d}$ existant entre les feuilles avant leur assemblage. Dans le cas le plus usuel selon l'invention, la feuille 2 étant plane, le rayon $R_2$ est infini.

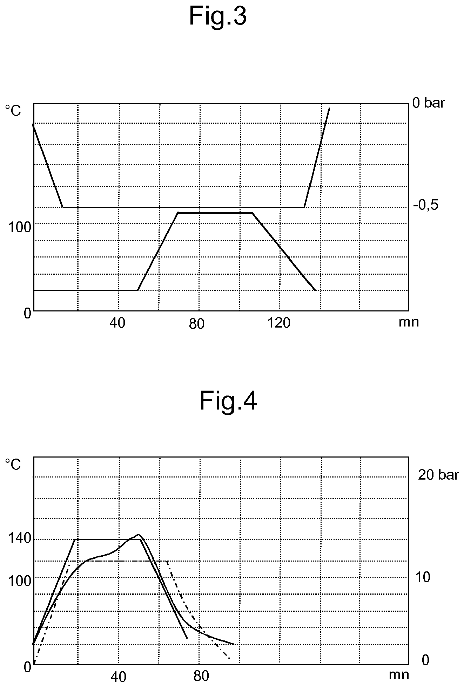

L'assemblage des feuilles comprend deux étapes dont des conditions de mise en oeuvre sont représentées aux figures 3 et 4.

La première étape qui conduit les feuilles à un assemblage des éléments constitutifs, feuilles de verre et intercalaire thermoplastique, comprend une mise sous pression et l'élévation de la température.

La figure 3 donne l'indication de l'évolution dans le temps exprimé en minutes de la pression exercée en bar, et de la température. La pression est exprimée de manière négative pour illustrer le fait que l'on procède par un vide relatif qui permet non seulement d'exercer la pression sur les feuilles par l'intermédiaire des enveloppes dans lesquelles elles sont placées, mais simultanément d'éliminer l'air présent entre ces feuilles.

La dépression est exercée tout au long de l'opération, et n'est relâchée qu'après que la température soit revenue à la température ambiante, l'intercalaire thermoplastique étant alors parfaitement stabilisé après le temps de ramollissement nécessaire pour le collage des feuilles de verre. Ce dernier intervient dans la phase correspondant au palier de température de l'ordre de 110°C pour un intercalaire de type polyvinyl-butyral.

Au cours de cette première étape, la dépression plaque les feuilles les unes sur les autres, la feuille 1, moins rigide, venant épouser la forme de la feuille 2. L'intercalaire n'oppose aucune résistance dans cette mise en forme laquelle est d'autant plus facile que la feuille 2 est moins épaisse donc plus flexible.

A la sortie de l'étape de collage, les feuilles sont bien solidarisées. Le vitrage feuilleté nécessite encore une étape d'étuvage sous pression qui lui donne sa transparence finale. Après collage en effet le vitrage présente encore un voile qui tient à ce que le collage n'est pas parfaitement uniforme entre les surfaces des feuilles de verre et celles de l'intercalaire. L'étuvage à température plus élevée, par exemple de 140°C et sous une pression de 12 bars, pour un intercalaire de PVB, permet d'améliorer la transmission lumineuse. Au cours de l'étuvage, l'assemblage doit être maintenu sous pression pour éviter un délaminage.

La figure 4 montre d'une part la température de consigne de l'étuve (traits rectilignes) et la température du vitrage (ligne courbe). La pression est représentée par la ligne en tirets.

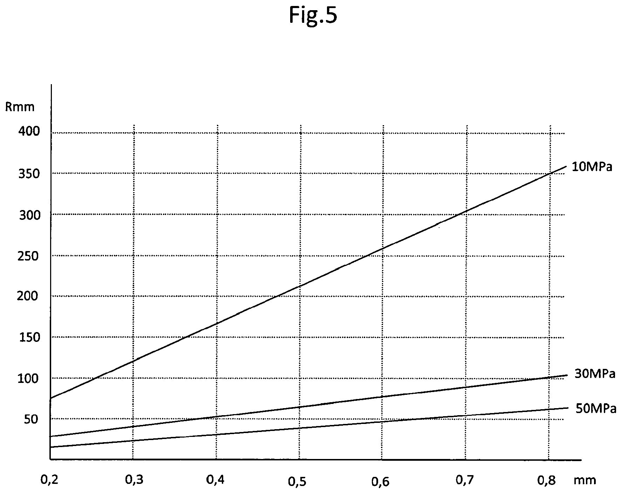

La figure 5 illustre la relation existant entre l'épaisseur de la deuxième feuille et le rayon de courbure qui lui est imposé lors de l'assemblage. Le graphique montre cette relation lorsque l'on se fixe une contrainte de surface à ne pas dépasser. A titre indicatif trois valeurs de contraintes sont représentées : 10MPa, 20MPa et 50 MPa.

Ce graphique montre de façon très explicite que le rayon de courbure pour une même épaisseur dépend pour beaucoup du niveau de contrainte acceptable. A titre indicatif pour une feuille de 0,4mm d'épaisseur si l'on accepte une contrainte de 50MPa, le rayon de courbure peut être aussi petit que 300mm. Si la contrainte ne doit pas dépasser 10MPa, le rayon de courbure ne doit pas être inférieur à 1500mm.

Si l'épaisseur de la feuille s'accroît, les rayons de courbure acceptables sont aussi plus importants. Autrement dit pour pouvoir donner aux feuilles un rayon de courbure relativement faible, il est nécessaire de choisir des feuilles aussi peu épaisses que possible.

L'avantage de l'utilisation d'une deuxième feuille très mince se trouve aussi dans les modifications constatées sur le vitrage final par rapport à la courbure initiale de la feuille préalablement bombée. Des mesures de déformation maximum existant entre la forme initiale et celle correspondant à l'assemblage.

A titre indicatif pour des feuilles s'étendant sur 50cm dans la direction de la courbure et une distance initiale la plus grande, (d figure 2) entre les deux feuilles et selon les épaisseurs respectives de feuilles, on constate une variation :

- feuille 1 1,6mm ; d 8,5mm ; feuille 2 0,4mm ; modification après assemblage environ 1mm ;

- feuille 1 3,8mm ; d 12,3mm ; feuille 2 0,4mm ; modification après assemblage environ 0,4mm ;

Comme il est prévisible la modification est d'autant moins sensible que la feuille 1 est plus épaisse. Ces valeurs correspondent à des courbures relativement importantes. Bien entendu le choix des feuilles et la courbure initiale de la feuille 1, doit prendre en compte ces modifications dans la production des vitrages aux dimensions demandées par les constructeurs.

Des essais sont aussi effectués pour vérifier la résistance aux impacts. Le "gravel test" suivant la pratique consiste à laisser tomber une bille sur le vitrage d'une hauteur croissante. On établit la hauteur pour laquelle la feuille sur laquelle la bille tombe est cassée. Suivant les demandes des constructeurs, et pour des vitrages latéraux, l'impact considéré se situe sur la feuille tournée vers l'habitacle. Dans ces conditions l'impact est donc sur la feuille mince sous contrainte. Pour des assemblages feuille1/feuille2 de 1,6/0,4mm, la feuille mince étant trempée, les hauteurs constatées sont équivalentes à celles correspondantes que l'on observe pour les vitrages monolithiques.

## Revendications

**1.** Vitrage automobile feuilleté de forme incurvée résultant de l'assemblage d'une première feuille de verre incurvée préalablement à cet assemblage, d'une feuille intercalaire thermoplastique et d'une deuxième feuille de verre d'épaisseur qui n'est pas supérieure au tiers de celle de la première feuille, la deuxième feuille de verre ne présentant pas de courbure, ou une courbure sensiblement moindre que celle de la première feuille avant son assemblage avec cette dernière et la feuille intercalaire thermoplastique, dans lequel le rapport des épaisseurs est d'au moins 3/1 et dans lequel dans l'assemblage effectué la deuxième feuille de verre présente une contrainte de surface qui n'est pas supérieure à 50MPa, et de préférence pas supérieure à 30MPa.

**2.** Vitrage selon la revendication 1 dans lequel l'épaisseur de l'ensemble des deux feuilles de verre n'est pas supérieure à 3,7mm et de préférence pas supérieure à 2,8mm.

**3.** Vitrage selon l'une des revendications précédentes dans lequel la première feuille de verre présente une épaisseur qui n'est pas supérieure à 2,1mm.

**4.** Vitrage selon l'une des revendications précédentes dans lequel la deuxième feuille de verre présente une épaisseur qui n'est pas supérieure à 0,8mm et de préférence pas supérieure à 0,6mm

**5.** Vitrage selon l'une des revendications précédente dans lequel la deuxième feuille présente une épaisseur qui n'est pas inférieure à 0,2mm.

**6.** Vitrage selon l'une des revendications précédentes dans lequel la première feuille de verre présente une épaisseur qui n'est pas supérieure à 3,2mm et de préférence qui n'est pas supérieure à 2,1mm.

**7.** Vitrage selon l'une des revendications précédentes dans lequel la courbure de la première feuille de verre est de forme cylindrique et le rayon de courbure n'est pas inférieur à 1m et de préférence pas inférieur à 1,5m.

**8.** Vitrage selon l'une des revendications précédentes dans lequel le rapport des rayons de courbure de la deuxième feuille de verre par rapport à celui de la première feuille, avant assemblage, est tel que $R_2/R_1>2$, et de préférence $R_2/R_1>10$.

**9.** Vitrage selon l'une des revendications précédentes dans lequel avant assemblage la deuxième feuille de verre n'est pas incurvée.

**10.** Vitrage selon l'une des revendications précédentes dans lequel la feuille intercalaire présente une épaisseur qui n'est pas supérieure à 0,8mm.

**11.** Vitrage selon l'une des revendications précédentes dans lequel au moins la deuxième feuille de verre est trempée chimiquement.

**12.** Vitrage selon l'une des revendications précédente dans lequel la deuxième feuille de verre porte sur la face au contact de l'intercalaire thermoplastique un système de couche filtrant les rayons infrarouges.

**13.** Vitrage selon l'une des revendications précédente constituant un vitrage latéral automobile.

## Patentansprüche

**1.** Laminierte, gebogene Glasscheibe für ein Kraftfahrzeug, die sich aus dem Zusammenbau einer ersten Glasplatte, die vor diesem Zusammenbau gebogen wurde, einer thermoplastischen Zwischenlage und einer zweiten Glasplatte mit einer Dicke ergibt, die nicht mehr als ein Drittel der Dicke der ersten Platte beträgt, wobei die zweite Glasplatte keine Krümmung oder eine Krümmung aufweist, die wesentlich geringer ist als die der ersten Platte vor deren Zusammenbau mit letzterer und der thermoplastischen Zwischenlage, wobei das Verhältnis der Dicken mindestens 3/1 beträgt und wobei die zweite Glasplatte beim Zusammenbauen eine Oberflächenspannung von nicht mehr als 50 MPa und vorzugsweise nicht mehr als 30 MPa aufweist.

**2.** Glasscheibe nach Anspruch 1, wobei die Dicke der Anordnung der zwei Glasplatten nicht mehr als à 3,7 mm und vorzugsweise nicht mehr als 2,8 mm beträgt.

**3.** Glasscheibe nach einem der vorhergehenden Ansprüche, wobei die erste Glasplatte eine Dicke aufweist, die nicht mehr als 2,1 mm beträgt.

**4.** Glasscheibe nach einem der vorhergehenden Ansprüche, wobei die zweite Glasplatte eine Dicke aufweist, die nicht mehr als 0,8 mm und vorzugsweise nicht mehr als 0,6 mm beträgt.

**5.** Glasscheibe nach einem der vorhergehenden Ansprüche, wobei die zweite Glasplatte eine Dicke aufweist, die nicht weniger als 0,2 mm beträgt.

**6.** Glasscheibe nach einem der vorhergehenden Ansprüche, wobei die erste Glasplatte eine Dicke aufweist, die nicht mehr als 3,2 mm und die vorzugsweise nicht mehr als 2,1 mm beträgt.

**7.** Glasscheibe nach einem der vorhergehenden Ansprüche, wobei die Krümmung der ersten Glasplatte zylindrisch ist und der Krümmungsradius nicht kleiner als 1 m und vorzugsweise nicht kleiner als 1,5 m ist.

8. Glasscheibe nach einem der vorhergehenden Ansprüche, wobei das Verhältnis der Krümmungsradien der zweiten Glasplatte in Bezug auf den der ersten Platte vor dem Zusammenbau derart ist, dass $R_2/R_1>2$ und vorzugsweise $R_2/R_1>10$.

9. Glasscheibe nach einem der vorhergehenden Ansprüche, wobei die zweite Glasplatte vor dem Zusammenbau nicht gekrümmt ist.

10. Glasscheibe nach einem der vorhergehenden Ansprüche, wobei die Zwischenlage eine Dicke aufweist, die nicht mehr als 0,8 mm beträgt.

11. Glasscheibe nach einem der vorhergehenden Ansprüche, wobei mindestens die zweite Glasplatte chemisch vorgespannt ist.

12. Glasscheibe nach einem der vorhergehenden Ansprüche, wobei die zweite Glasplatte auf der Seite, die mit der thermoplastischen Zwischenlage in Kontakt ist, ein Schichtsystem zum Filtern von Infrarotstrahlen trägt.

13. Glasscheibe nach einem der vorhergehenden Ansprüche, die eine Seitenscheibe eines Kraftfahrzeugs bildet.

**Claims**

1. Laminated automotive glazing of curved shape, said glazing resulting from the assembly of a first glass sheet that is bent prior to this assembly, a thermoplastic interlayer sheet and a second glass sheet of thickness that is no larger than one third of the thickness of the first sheet, the second glass sheet having no curvature, or a curvature that is substantially less than the curvature of the first sheet before its assembly with the latter and the thermoplastic interlayer sheet, wherein the ratio of the thicknesses is at least 3/1 and wherein, in the assembly that is carried out, the second glass sheet has a surface stress that is no higher than 50 MPa, and preferably no higher than 30 MPa.

2. Glazing according to Claim 1, wherein the thickness of the two glass sheets together is no larger than 3.7 mm and preferably no larger than 2.8 mm.

3. Glazing according to either of the preceding claims, wherein the first glass sheet has a thickness that is no larger than 2.1 mm.

4. Glazing according to one of the preceding claims, wherein the second glass sheet has a thickness that is no larger than 0.8 mm and preferably no larger than 0.6 mm.

5. Glazing according to one of the preceding claims, wherein the second glass sheet has a thickness that is no smaller than 0.2 mm.

6. Glazing according to one of the preceding claims, wherein the first glass sheet has a thickness that is no larger than 3.2 mm and preferably that is no larger than 2.1 mm.

7. Glazing according to one of the preceding claims, wherein the curvature of the first glass sheet is of cylindrical shape and the radius of curvature is no smaller than 1 m and preferably no smaller than 1.5 m.

8. Glazing according to one of the preceding claims, wherein the ratio of the radii of curvature of the second glass sheet with respect to that of the first sheet, before assembly, is such that $R_2/R_1>2$, and preferably $R_2/R_1>10$.

9. Glazing according to one of the preceding claims, wherein, before assembly, the second glass sheet is not curved.

10. Glazing according to one of the preceding claims, wherein the interlayer sheet has a thickness that is no larger than 0.8 mm.

11. Glazing according to one of the preceding claims, wherein at least the second glass sheet is chemically tempered.

12. Glazing according to one of the preceding claims, wherein the second glass sheet bears, on the face making contact with the thermoplastic interlayer, an infrared-filtering layer system.

13. Glazing according to one of the preceding claims, forming an automotive side glazing.

## Fig.1a

## Fig.1b

## Fig.2

## Fig.3

## Fig.4

# Fig.5

**EP 2 729 303 B1**

## RÉFÉRENCES CITÉES DANS LA DESCRIPTION

**Documents brevets cités dans la description**

- EP 1200255 A